# EUROPEAN PATENT APPLICATION

(11) **EP 4 675 599 A1**
(43) Date of publication of application: **07.01.2026**
(21) Application number: 24186865.2
(22) Date of filing: 05.07.2024
(51) Int. Cl.: G09G 3/20, B60K 35/22

(54) **DISPLAY DEVICE WITH MULTIPLE DISPLAY AREAS**

(71) Applicant: Elektrobit Automotive GmbH, 91058 Erlangen (DE)
(72) Inventor: Franke, Thomas, 91058 Erlangen (DE); Stumpp, Kerstin, 91058 Erlangen (DE); Joos, Jürgen, 91058 Erlangen (DE); Jahn, Patrick, 91058 Erlangen (DE)
(74) Representative: Aumovio Corporation

(57) **Abstract**

The present invention is related to a display device (1). The display device (1) comprises a first display area (10) and first circuitry (11) for addressing pixels associated with the first display (10). The display device (1) further comprises a second display area (10') and second circuitry (11') independent from the first circuitry (11) for addressing pixels associated with the second display area (10'). A boundary area (12) between the first display area (10) and the second display area (10') is free from both the first circuitry (11) and the second circuitry (11').

## Description

The present invention is related to a display device, in particular to a display device with at least two display areas.

In modern motor vehicles, an increasing amount of information is provided for the driver or other vehicle occupants, which goes far beyond the display of the vehicle's condition. Conventional combination instruments are therefore increasingly being replaced by freely programmable, digital displays.

In order to achieve redundancy or an increased display area, display device may make use of two or more separate displays that are placed close to each other behind a single, common cover glass. However, due to the manufacturing processes, a certain minimum space between adjacent displays is needed, e.g., due to display bonding tolerances, dead bands of the displays, etc. The current technologies for manufacturing display panels always need a certain amount of dead band around the display area, i.e., a certain amount of unusable space. Furthermore, an assembly gap between the adjacent displays is necessary because positioning of the displays relative to each other is subject to tolerances. In the worst case, the displays might hit each other during assembly. To cover the necessary gap between the adjacent displays, typically the common cover glass is provided with a so-called black mask.

It is an object of the present invention to provide a display device with at least two display areas, which has a reduced distance between the display areas.

This object is achieved by a display device according to claim 1. The dependent claims include advantageous further developments and improvements of the present principles as described below.

According to a first aspect, a display device comprises:
- a first display area;
- first circuitry for addressing pixels associated with the first display;
- a second display area; and
- second circuitry independent from the first circuitry for addressing pixels associated with the second display area;
wherein a boundary area between the first display area and the second display area is free from both the first circuitry and the second circuitry.

According to the invention, the necessary distance between the display areas is reduced by providing two independent sets of circuitry for addressing pixels associated with the respective display areas. The circuitry is responsible for sending the power and the signal from an input device to the individual pixels. The circuitry has two lines for each pixel, i.e., one vertical line and one horizontal line. The independent circuitry for the display areas is designed in such a way that there is no circuitry located in the boundary area between the display areas. In this way, the display areas can be arranged very close to each other.

In an advantageous embodiment, the first display area and the second display area are arranged below a common cover glass. Especially in automotive applications, a seamless appearance is desired. Therefore, different display areas are often arranged below one common cover glass. This common cover glass is typically provided with a mask, e.g., black paint applied to the back of the cover glass (= black mask), for masking the borders of the display device and the unusable space between the display areas. The solution according to the invention allows reducing the unusable space to a minimum, which supports the seamless appearance of the display device.

In an advantageous embodiment, the first display area and the second display area are provided by a single display panel. In contrast to known display panels, this display panel has two sets of driver routing areas, one set for each display area. Each set comprises one horizontal driver routing area and one vertical driver routing area. The pixels of the two display areas are on the same layer of carrier material. With this approach, the distance between the two display areas can be zero.

In an advantageous embodiment, the first display area is provided by a first display panel and the second display area is provided by a separate second display panel. This approach uses two display panels instead of one single display panel. In contrast to known display panels, the circuitry for addressing the pixels is designed in such a way that at least one boarder of each display panel is free from circuitry. Therefore, at this border the two display panels can be placed very close to each other. The main limitations for the minimum distance are the manufacturing tolerances. With this approach, a minimum gap of 2-3 mm between the display areas can be achieved.

In an advantageous embodiment, the first display panel and the second display panel partially overlap. This approach is particularly suitable for emissive display panels, such as e.g., OLED (OLED: Organic Light Emitting Diode) or µLED (µLED: Micro Light Emitting Diode) display panels. As before, the circuitry for addressing the pixels is designed in such a way that at least one boarder of each display panels is free from circuitry. With this approach, a minimum gap of 1-4 mm between the display areas can be achieved. The overlapping display panels can be provided with a common cover glass by using different thicknesses of a glue layer between the cover glass and the display panels.

In an advantageous embodiment, the first display panel and the second display panel are identical display panels. This has the advantage that only a single type of display panel is needed. During manufacturing, the second display panel is rotated by 180° relative to the first display panel. Alternatively, the first display panel and the second display panel are differing display panels.

In an advantageous embodiment, the first display panel and the second display panel are mirror symmetrical display panels. This has the advantage that it is possible to keep one side of the display device free from circuitry for addressing the pixels. In this way, the space required for mounting the display device in a housing is reduced.

In an advantageous embodiment, the display device is configured to communicate a malfunction of a display area to a controller. If one display area fails, this can be communicated to a controller. The information intended for display on this display area can then be shown on the other display area.

Advantageously, an apparatus comprises a display device according to the invention. For example, the apparatus may be a motor vehicle, such as a passenger car or a truck, a motorcycle, an aircraft, a rail vehicle, or a watercraft. The apparatus may likewise be a consumer electronic device, a medical device, or an industrial machine.

Further features of the present invention will become apparent from the following description and the appended claims in conjunction with the figures.

### Figures

- Fig. 1: schematically illustrates a first embodiment of a display device;
- Fig. 2: schematically illustrates a second embodiment of a display device;
- Fig. 3: schematically illustrates an arrangement of display areas of the embodiments of Fig. 1 or Fig. 2 behind a cover glass;
- Fig. 4: schematically illustrates a third embodiment of a display device;
- Fig. 5: schematically illustrates a fourth embodiment of a display device;
- Fig. 6: schematically illustrates an arrangement of display areas of the embodiments of Fig. 4 or Fig. 5 behind a cover glass;
- Fig. 7: schematically illustrates a fifth embodiment of a display device;
- Fig. 8: schematically illustrates a sixth embodiment of a display device;
- Fig. 9: schematically illustrates an arrangement of display areas of the embodiments of Fig. 7 or Fig. 8 behind a cover glass;
- Fig. 10: schematically illustrates a motor vehicle in using a display device according to the invention.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

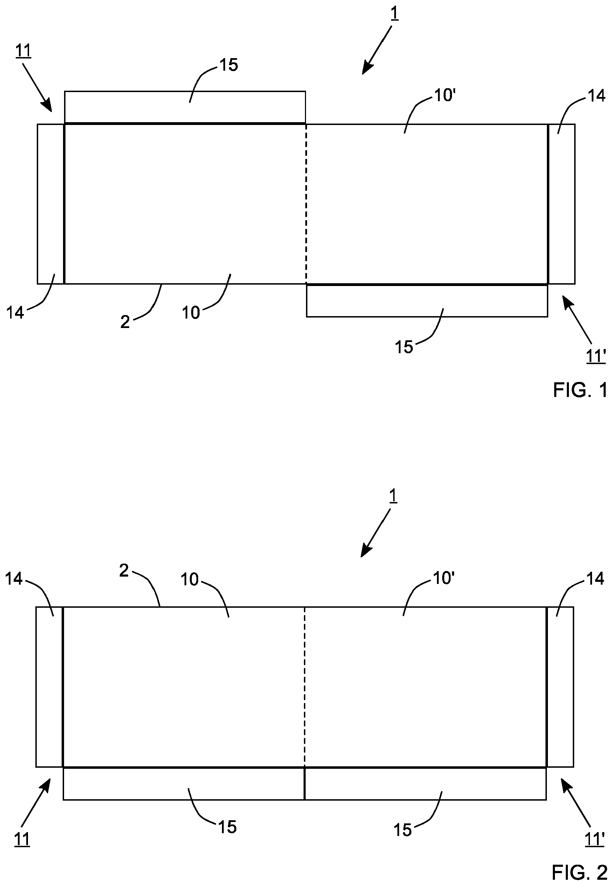

Fig. 1 schematically illustrates a first embodiment of a display device 1. In this embodiment, the display device 1 comprises a single display panel 2, which provides a first display area 10 and a second display area 10'. However, this display panel 2 has separate circuitry 11, 11' for the two display areas 10, 10'. In particular, the display panel 2 has two sets of driver routing areas 14, 15, one set for each display area 10, 10'. Each set comprises one horizontal driver routing area 14 and one vertical driver routing area 15. For example, the display panel 2 may have two sets of driver printed circuit boards for the two display areas 10, 10', where each set may comprise one horizontal driver printed circuit board and one vertical driver printed circuit board. The pixels of the two display areas 10, 10' are on the same layer of carrier material.

Fig. 2 schematically illustrates a second embodiment of a display device 1. The embodiment is largely identical to the embodiment of Fig. 1. However, in this case the circuitry 11, 11' for addressing the pixels of the display panel 2 is designed such that the upper border of the display panel 2 is free from circuitry. In this way, one side of the display device 1 can be kept free from circuitry 11, 11', which allows reducing the space required for mounting the display device 1 in a housing.

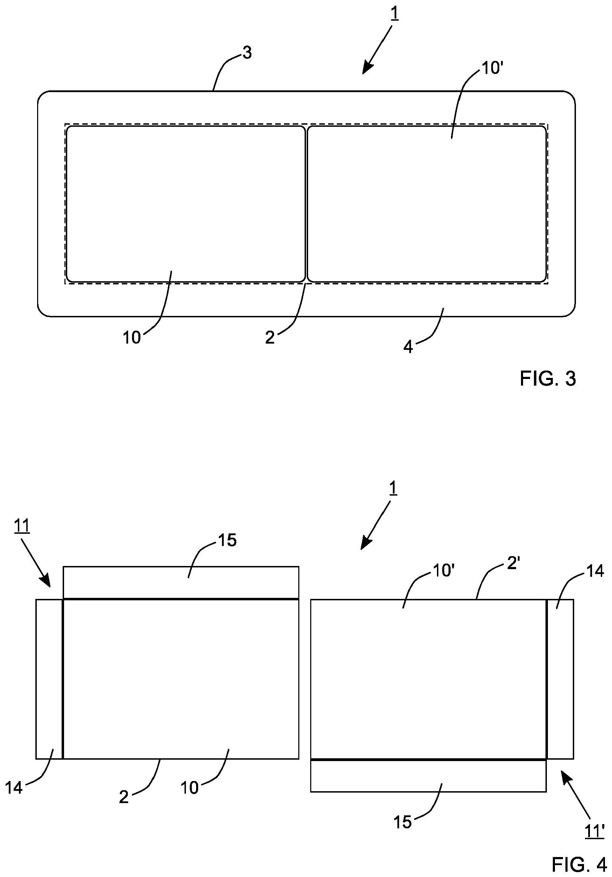

Fig. 3 schematically illustrates an arrangement of display areas 10, 10' of the embodiments of Fig. 1 or Fig. 2 behind a cover glass 3. The cover glass 3 is provided with a mask 4, e.g., black paint applied to the back of the cover glass 3. This mask 4 allows masking the borders of the display panel 2 and the unusable space between the display areas 10, 10'. As can be seen, the distance between the two display areas 10, 10' can be zero. In Fig. 3, the distance is just a single pixel.

Fig. 4 schematically illustrates a third embodiment of a display device 1. In this embodiment, the first display area 10 is provided by a first display panel 2 and the second display area 10' is provided by a separate second display panel 2'. This approach uses two display panels 2, 2' instead of a single display panel. In contrast to known display panels, the circuitry 11, 11' for addressing the pixels is designed in such a way that at least one boarder of each display panel 2, 2' is free from circuitry. Therefore, at this border the two display panels 2, 2' can be placed very close to each other. In Fig. 4, the two display panels 2, 2' are identical. Therefore, the second display panel 2' is rotated by 180° relative to the first display panel 2.

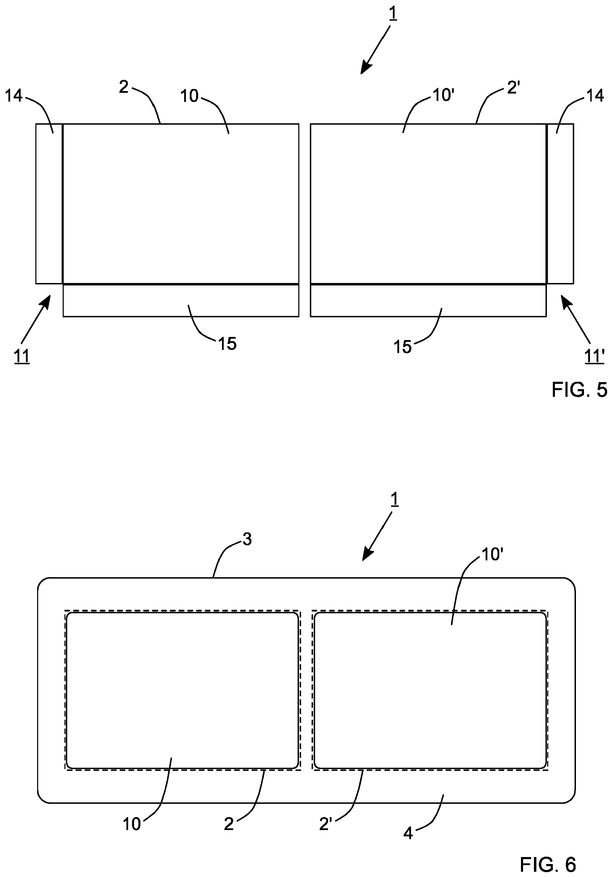

Fig. 5 schematically illustrates a fourth embodiment of a display device 1. The embodiment is largely identical to the embodiment of Fig. 4. However, in this case the two display panels 2, 2' are mirror symmetrical display panels 2, 2'. In this way, one side of the display device 1 can be kept free from circuitry 11, 11' for addressing the pixels. This allows reducing the space required for mounting the display device 1 in a housing.

Fig. 6 schematically illustrates an arrangement of display areas 10, 10' of the embodiments of Fig. 4 or Fig. 5 behind a cover glass 3. The cover glass 3 is provided with a mask 4 for masking the borders of the display panels 2, 2' and the unusable space between the display areas 10, 10'. The main limitations for the minimum distance between the display areas 10, 10' are the manufacturing tolerances. At present, a minimum gap of 3 mm between the display areas 10, 10' can be achieved.

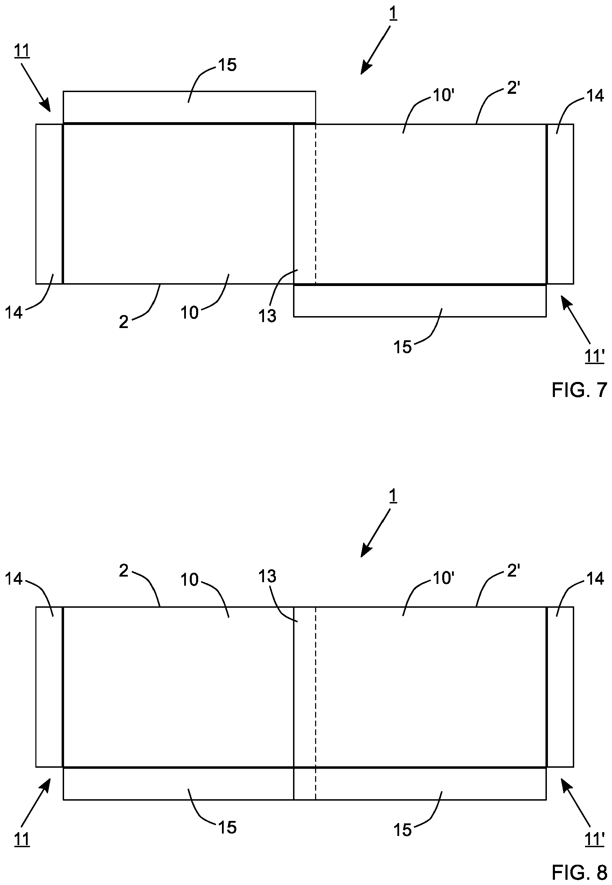

Fig. 7 schematically illustrates a fifth embodiment of a display device 1. In this embodiment, the first display area 10 is provided by a first display panel 2 and the second display area 10' is provided by a separate second display panel 2'. The two display panels 2, 2' partially overlap in an overlap region 13. This approach is particularly suitable for emissive display panels, such as OLED or µLED display panels. As before, the circuitry 11, 11' for addressing the pixels is designed in such a way that at least one boarder of each display panel 2, 2' is free from circuitry.

Fig. 8 schematically illustrates a sixth embodiment of a display device 1. The embodiment is largely identical to the embodiment of Fig. 7. However, in this case the two display panels 2, 2' are mirror symmetrical display panels 2, 2'. In this way, one side of the display device 1 can be kept free from circuitry 11, 11' for addressing the pixels, which allows reducing the space required for mounting the display device 1 in a housing.

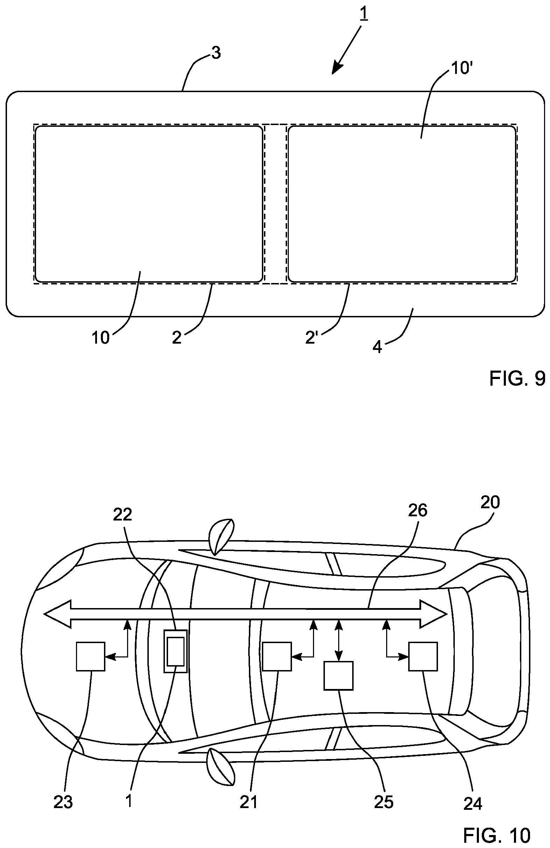

Fig. 9 schematically illustrates an arrangement of display areas 10, 10' of the embodiments of Fig. 7 or Fig. 8 behind a cover glass 3. The cover glass 3 is provided with a mask 4 for masking the borders of the display panels 2, 2' and the unusable space between the display areas 10, 10'. At present, a minimum gap of 4 mm between the display areas 10, 10' can be achieved with this approach. The common cover glass 3 can be mounted on the overlapping display panels 2, 2' by using different thicknesses of a glue layer between the cover glass 3 and the display panels 2, 2'.

Fig. 10 schematically shows a motor vehicle 20, which uses a display device 1 according to the invention. For example, the display device 1 may be arranged in a dashboard. The motor vehicle 20 in this example is a passenger car. With a sensor system 21, data on the vehicle environment can be recorded. The sensor system 21 may include sensors for detecting the surroundings, e.g., ultrasonic sensors, laser scanners, radar sensors, lidar sensors or cameras. The information recorded by the sensor system 21 can be used to generate content for the display device 1 to be displayed. The display device 1 may be part of an infotainment system 22. Further components of the motor vehicle 20 in this example are a navigation system 23, through which position information can be provided, and a data transmission unit 24. Through the data transmission unit 24, a connection to a backend can be established, e.g., to receive software updates for the components of the motor vehicle 20. A memory 25 is available for storing data. The data exchange between the different components of the motor vehicle 20 takes place via a network 26.

### Reference numerals

- 1: Display device
- 2: First display panel
- 2': Second display panel
- 3: Cover glass
- 4: Mask
- 10: First display area
- 10': Second display area
- 11: First circuitry
- 11': Second circuitry
- 12: Boundary area
- 13: Overlap region
- 14: Horizontal driver routing area
- 15: Vertical driver routing area

- 20: Motor vehicle
- 21: Sensor system
- 22: Infotainments system
- 23: Navigation system
- 24: Data transmission unit
- 25: Memory
- 26: Network

## Claims

1. A display device (1), comprising:
- a first display area (10);
- first circuitry (11) for addressing pixels associated with the first display (10);
- a second display area (10'); and
- second circuitry (11') independent from the first circuitry (11) for addressing pixels associated with the second display area (10');
wherein a boundary area (12) between the first display area (10) and the second display area (10') is free from both the first circuitry (11) and the second circuitry (11').

2. The display device (1) according to claim 1, wherein the first display area (10) and the second display area (10') are arranged below a common cover glass (3).

3. The display device (1) according to claim 1 or 2, wherein the first display area (10) and the second display area (10') are provided by a single display panel (2).

4. The display device (1) according to claim 1 or 2, wherein the first display area (10) is provided by a first display panel (2) and the second display area (10') is provided by a separate second display panel (2').

5. The display device (1) according to claim 4, wherein the first display panel (2) and the second display panel (2') partially overlap.

6. The display device (1) according to claim 4 or 5, wherein the first display panel (2) and the second display panel (2') are identical display panels (2, 2') or differing display panels (2, 2').

7. The display device (1) according to claim 4 or 5, wherein the first display panel (2) and the second display panel (2') are mirror symmetrical display panels (2, 2').

8. The display device (1) according to one of the preceding claims, wherein the display device (1) is configured to communicate a malfunction of a display area (10, 10') to a controller.

9. An apparatus (20) comprising a display device (1) according to one of claims 1 to 8.

10. The apparatus according to claim 9, wherein the apparatus (20) is a motor vehicle.
